# EUROPEAN PATENT APPLICATION

(11) **EP 0 737 964 A1**
(43) Date of publication of application: **16.10.1996**
(21) Application number: 96105752.8
(22) Date of filing: 11.04.1996
(51) Int. Cl.: G11B 7/125, G11B 7/135

(54) **An apparatus for and method of reproducing information from different types of optical disks and an optical disk recording/reproducing apparatus**

(30) Priority: 14.04.1995 JP 89222/95
(71) Applicant: KABUSHIKI KAISHA TOSHIBA, Kawasaki-shi, Kanagawa-ken 210 (JP)
(72) Inventor: Satoh, Hiroharu, c/o Int. Prop. Div., K.K. Toshiba, Minato-ku, Tokyo 105 (JP); Yamada, Hisashi, c/o Int. Prop. Div., K.K. Toshiba, Minato-ku, Tokyo 105 (JP)
(74) Representative: Henkel, Feiler, Hänzel & Partner

(57) **Abstract**

In an optical disk apparatus, the laser beam from a semiconductor laser (50) is collimated and enters a half prism (53), which directs it to an object lens (34) that converges the laser beam at the reflecting layer (16) of an optical disk (10). Between the half prism (53) and the object lens (34), apertures (54, 59) that can be selected are provided. One of the apertures (54, 59) is selected according to the thickness of the transparent substrate (14) of the optical disk (10) or the recording density of recording marks on the reflecting layer (16), thereby limiting the diameter of the optical beam directed to the object lens (34) as the need arises. As a result, according to the thickness of the transparent substrate (14) of the optical disk (10) or the recording density of recording marks on the reflecting layer (16), a beam spot of the optimum size is always formed on the reflecting layer (16).

## Description

This invention relates to an apparatus for and method of reproducing information from different types of optical disks and an optical disk recording/reproducing apparatus, and more particularly to an apparatus for and method of reproducing information from optical disks capable of the optimum reproduction according to the physical properties of an optical disk and to an optical disk recording/reproducing apparatus capable of the optimum recording and reproduction according to the physical properties of an optical disk.

Generally, with an optical disk reproducing apparatus (hereinafter, referred to as an optical disk apparatus), the optical beam of a constant intensity gathered by a condensing lens of an optical head is directed onto an optical disk in a reproducing operation, and the optical beam reflected from the optical disk is sensed to reproduce the information. Furthermore, with an optical disk recording/reproducing apparatus (hereinafter, referred to as an optical disk apparatus) capable of recording the data as well as reproducing the data, the optical beam modulated using the information to be recorded is directed from the optical head to the optical disk in a recording operation and the modulated optical beam causes physical changes on the optical disk to produce an information recording section in the form of, for example, pits, thereby recording the information on the optical disk.

Optical disks are available with the read-only type and the recordable type, compatible with the types of optical disk apparatuses. In the case of the read-only optical disk, pit trains, recording information, are impressed spirally on a transparent substrate beforehand and a reflecting layer, or a recording layer, (hereinafter, referred to as a reflecting surface) is formed on the impressed surface. With the recordable optical disk, tracks acting as areas in which the information is to be recorded are previously formed on the recording layer formed on the transparent substrate. The information is recorded along these tracks and the information is reproduced from the information recording section formed on the tracks.

With such optical disk apparatuses, the information recording/reproducing optical head is moved radially to the desired track or pit train (hereinafter, referred to the track) on the optical disk and the optical beam emitted from the optical head is gathered via the transparent optical disk substrate on the reflecting surface to form an optical beam spot.

Normally, the condensing lens of the optical head is designed so that when the optical beam enters a substrate of a constant thickness, it may form a very small spot. Therefore, in a case where a condensing lens supposed to be used with an optical disk having a substrate of a specified thickness is used to gather an optical beam onto an optical disk having a substrate of a different thickness from the specified thickness, when the optical beam passes through the substrate, a large aberration develops, making it difficult to form a very small spot on the reflecting surface. When the condensing lens tilts a little with respect to the substrate, there is a possibility that when an optical beam passes through a substrate having a different thickness from that of the substrate designed to use with the condensing lens, the optical beam will undergo a large aberration. For example, when a laser beam with a wavelength of 650 mm is gathered by a condensing lens with an numerical aperture of 0.6 designed for a 0.6-mm-thick substrate onto the reflecting surface of a compact disk (what is called a CD) via its 1.2 mm-thick substrate. When the information is reproduced from the CD, the center light intensity of the light spot on the reflecting surface is lower and the side lobes are larger, making it difficult to reproduce the information.

In a case where the information is recorded on and reproduced from an optical disk whose substrate thickness is the same, but whose recording density is different, the optical beam diameter most suitable for recording and reproducing is different, thus making it impossible to record and reproduce the data.

Accordingly, to reproduce the data from optical disks of different substrate thicknesses, a plurality of condensing lenses must be used. Similarly, to reproduce the data from disks of different recording densities, a plurality of condensing lenses must be used.

An object of the present invention is to provide an apparatus for and method of reproducing the information even from optical disks having different substrate thicknesses or from optical disks having the same substrate thickness but different recording densities.

Another object of the present invention is to provide an optical disk information recording/reproducing apparatus capable of recording the information on and reproducing the information even from optical disks having different substrate thicknesses or from optical disks having the same substrate thickness but different recording densities.

According to the present invention, there is provided an apparatus for optically reproducing information from an optical disk including a transparent substrate having one side and the other side stamped with information facing the one side and a reflecting layer formed on the other side of the transparent substrate, the apparatus comprising: an optical system for generating an optical beam and directing it to one side of the optical disk; converging means for converging the optical beam on the reflecting layer via the transparent substrate of the optical disk; limiting means for limiting the numerical aperture of the convergent optical beam directed to the reflecting layer by selecting one of a first and second apertures according to the physical properties of the optical disk; and sensing means for sensing the optical beam reflected from the reflecting layer and simultaneously intensity-modulated in reflection.

With an optical disk information recording/reproducing apparatus according to the present invention, one of the apertures is selected, depending on the physical properties of the optical disk and a beam spot of the size most suitable for the physical properties is always formed on the recording layer of the optical disk. Specifically, when the transparent substrate of the optical disk is relatively thin, an aperture is selected so that a convergent optical beam having a large numerical aperture may be projected; and when the transparent substrate of the optical disk is relatively thick, an aperture is selected so that a convergent optical beam having a small numerical aperture may be projected. Selecting an aperture this way decreases the aberration of the optical beam when the beam passes through the transparent substrate. Furthermore, when a high-recording-density optical disk is recorded on and reproduced from, an aperture is selected so that a convergent optical beam having a large numerical aperture may be projected; and when a low-recording-density optical disk is recorded on and reproduced from, an aperture is selected so that a convergent optical beam having a small numerical aperture may be projected. This way of selection enables a beam spot of the size most suitable for recording and reproducing to be formed on the recording layer.

This invention can be more fully understood from the following detailed description when taken in conjunction with the accompanying drawings, in which:
FIG. 1 is a schematic block diagram of an optical disk apparatus according to an embodiment of the present invention;
FIG. 2 is a schematic perspective view of an optical disk loaded in the optical disk apparatus of FIG. 1;
FIG. 3 is a schematic diagram of the optical system of an optical head with an optical disk with a relatively thin transparent substrate loaded in the optical disk apparatus of FIG. 1;
FIG. 4 is a schematic diagram of the optical system of an optical head with an optical disk with a relatively thick transparent substrate loaded in the optical disk apparatus of FIG. 1;
FIGS. 5A and 5B are plan views of aperture structures having selectable apertures and being usable for the optical head in the optical disk apparatus of FIG. 1;
FIG. 6 is a schematic diagram of the optical system of an optical head with a high-density recording optical disk loaded in the optical disk apparatus of FIG. 1;
FIG. 7 is a schematic diagram of the optical system of an optical head with a relatively low density recording optical disk loaded in the optical disk apparatus of FIG. 1;
FIG. 8 is a schematic diagram of a modification of the optical system of an optical head with an optical disk with a relatively thin transparent substrate loaded in the optical disk apparatus of FIG. 1;
FIG. 9 is a schematic diagram of a modification of the optical system of an optical head with an optical disk with a relatively thick transparent substrate loaded in the optical disk apparatus of FIG. 1; and
FIG. 10 is a schematic diagram of still another modification of the optical system of the optical head of the invention.

Hereinafter, referring to the accompanying drawings, embodiments of an optical disk reproducing apparatus, an optical disk reproducing method, and an optical disk recording/reproducing apparatus according to the present invention will be explained.

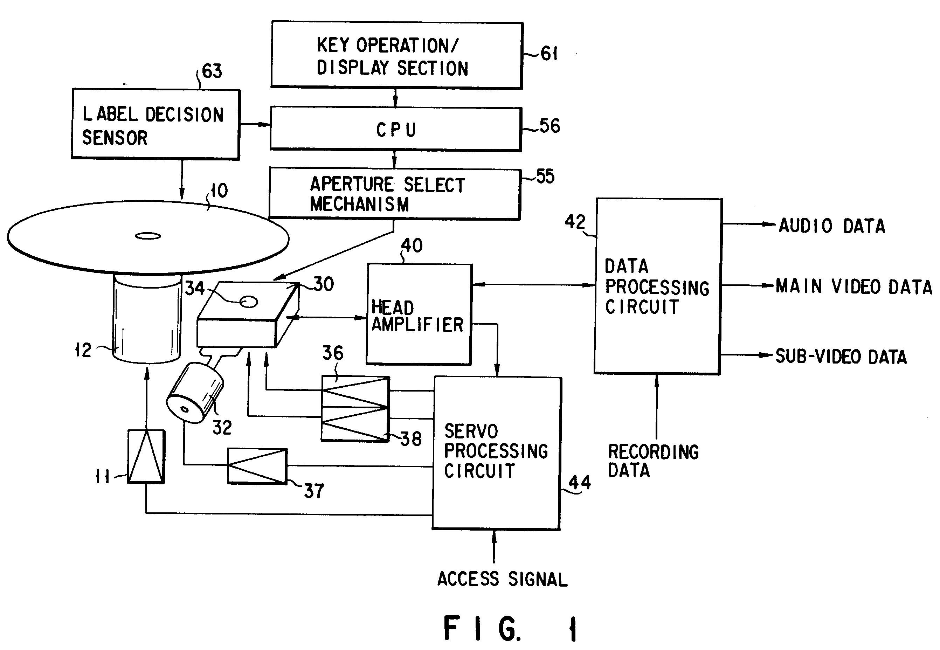

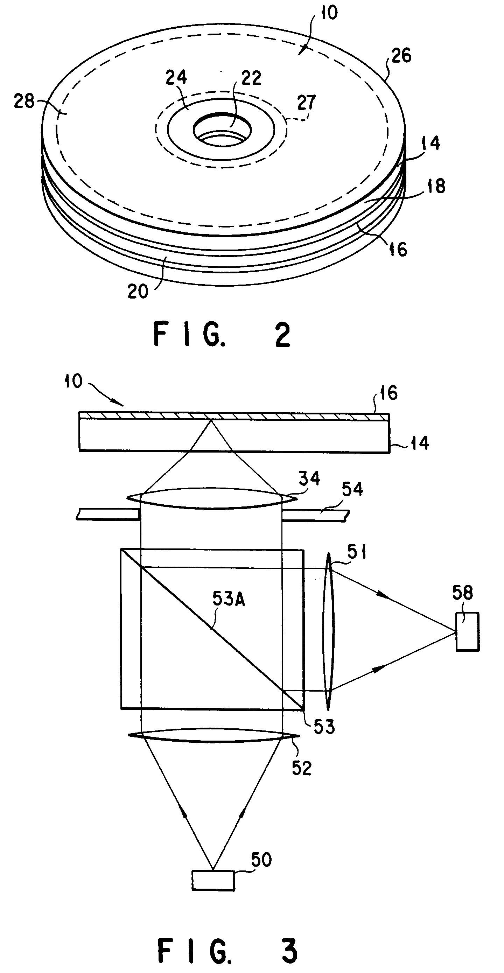

FIG. 1 shows the entire system of an optical disk reproducing apparatus and an optical disk recording/reproducing reproducing apparatus (hereinafter, referred to as an optical disk apparatus) according to an embodiment of the present invention. FIG. 2 illustrates an optical disk loaded in the optical disk apparatus of FIG. 1. FIG. 3 shows the optical system of an optical head built in the optical disk apparatus of FIG. 1.

In the optical disk apparatus of FIG. 1, an optical disk 10 is placed on a spindle motor 12 driven by a motor driving circuit 11, which rotates the optical disk. There have been various structures of the optical disk 10. One type of optical disk, which is available, is such that as shown in FIG. 3, for example, two units of a structure 18 where a light reflecting layer, or a recording layer 16, (hereinafter, referred to as a reflecting layer) is formed on a transparent substrate 14 of about 0.6 mm thick, are laminated together with an adhesive layer 20 so that the reflection layer 16 may be sealed inside the pair of structures, thereby achieving high recording density (this type of optical disk is known as a superdensity disk, or what is called an SD). For the optical disk 10 of such a structure, a central hole 22 into which the spindle of the spindle motor 12 is inserted is made in the disk's center. Around the central hole 22, a clamping area 24 is provided to clamp the optical disk 10 for spinning.

The area from the clamping area 24 to the outer edge of the optical disk 10 is determined to be an information recording area 25 in which information can be recorded on the optical disk 10. The optical disk shown in FIG. 3 has the information area 25 on each side of the disk. For each information recording area 25, its outer circumference area is determined to be a lead-out area 26 in which no information is normally recorded and its inner circumference area adjoining the clamping area 24 is determined to be a lead-in area 27 in which no information is normally recorded. The area between the lead-out area 26 and the lead-in area 27 is determined to be a data recording area 28. At the recording layer 16 in the information recording area 25, tracks are formed in a spiral continuously as an area in which data is to be recorded. The continuous tracks are divided into a plurality of sectors. Data is recorded on the basis of the sectors. The data recording area 28 in the information recording area 25 is an actual data recording area, in which the management data, the main video data, the sub-video data, and the audio data are recorded in the form of physical changes, such as pits.

With the read-only optical disk 10, pit trains have been formed by a stamper on the transparent substrate 14. A reflecting layer is formed on the side of the transparent substrate 14 on which the pit trains have been formed by evaporation. The reflecting layer is used as a recording layer 14. In the read-only optical disk 10, grooves are not particularly made and the pit trains are determined to be tracks (hereinafter, the pit trains are called tracks).

In addition to the optical disk 10 of the SD type shown in FIG. 1, such optical disks as compact disks (CDs) for music, read-only memory (ROM), or random access memory (RAM) have been available. An optical disk of the CD type has such a simple structure as has an light reflecting layer, or a recording layer, formed on a transparent substrate of about 1.2 mm thick, with a protective layer formed on the recording layer. The protective layer is normally printed with a label. With an optical disk of the CD type of the above structure, the information is retrieved from only one side using an optical beam.

In the optical disk apparatus of FIG. 1, an optical head 30 that projects an optical beam, or a laser beam, onto the optical disk 10 is provided below the optical disk 10. The optical head 30 is placed on a guide mechanism (not shown) so as to be able to move radially on the optical disk 10 to search for the data recording area 28 and, if necessary, the read-out area 26 and is traversed radially on the optical disk 10 by a feed motor 32 driven by the driving signal from a driving circuit 37. In the optical head 30, an object lens 34 is supported in a manner to allow movement along its optical axis and is moved along the optical axis in response to the driving signal from a focus driving circuit 36 so that the object lens 34 may be always in focus, thereby forming a very small beam spot on the reflecting layer 16. Furthermore, the object lens 34 is supported so as to move minutely across the radius of the optical disk 10 and is moved minutely in response to the driving signal from a track driving circuit 38 so as to be always kept in the tracking state, thereby causing the optical beam to trace the tracks on the reflecting layer 16 of the optical disk 10.

Furthermore, the optical head 30, as shown in FIG. 1, includes an aperture select mechanism 55 that selects apertures 54 and 59 explained later. The aperture select mechanism 55 is connected via a CPU 56 to a key operation/display section 61 and to a label decision sensor 63 that checks to see if a label is present on the surface of the optical disk 10 and determines the type of the disk. From the key operation/display section 61, when the user enters the type of the optical disk to be reproduced, that is, the SD type or the CD type, an aperture changeover signal according to the entered type is supplied to an aperture changeover mechanism 55, which then selects either the aperture 54 or 59 according to the input. An optical disk of the CD type usually has a label on its reverse side and the average of the reflectivity of the reverse side is lower than that of the right side to be searched by the optical beam. In contrast, both sides of an optical disk 10 of the SD type have almost equal, relatively large average reflectivities because both sides are to be searched. The average reflectivity is sensed by the label decision sensor 63. The optical disk loaded on the apparatus according to the reflectivity is sensed by the label decision sensor 63. A type decision signal according to the type of the optical disk 10 is supplied to the CPU 56. When there is no signal from the key operation/display section 61, the CPU 56 generates an aperture changeover signal, depending on the type decision signal according to the type of the optical disk 10. This causes the aperture changeover mechanism 55 to operate according to the type decision signal and selects either the aperture 54 or 59 according to the input.

The optical head 30 senses the optical beam reflected from the optical disk 10. The sensed signal is supplied from the optical head 30 to a data processing circuit 42 and a servo processing circuit 44 via a head amplifier 40. The data processing circuit 44 reproduces the search data, such as the audio data, the main video data, or the sub-video data, from the sensed signal. The servo processing circuit 44 generates a focus signal, a tracking signal, and a motor control signal from the sensed signal and supplies these signals to driving circuits 36, 38, 11, respectively. As a result, the object lens 34 is kept in the in-focus state and in the tracking state, the spindle motor 12 is rotated at a specific rotational speed, and the optical beam traces a track on the reflecting layer 16 at, for example, a constant linear speed.

When an access signal is externally supplied to the servo processing circuit 44, the circuit 44 supplies a move signal to a driving circuit 37 and the optical head 30 is moved in the direction of the radius of the optical disk 30 and accesses a specific sector on the reflecting layer 16.

In a recording operation, the recording data is externally supplied to the data processing circuit 42, which converts the data into a signal of a specified format, which is supplied to the head amplifier 40 as a modulation signal. By modulating the optical beam from the optical head 30 according to the modulation signal, physical changes are made in the reflecting layer 16 of the optical disk 10, thereby recording the data on the tracks on the reflecting layer 16. To erase the data recorded on the reflecting layer 16 of the optical disk 10, the data processing circuit 42 supplies an erase signal to the head amplifier 40 on the basis of an externally supplied erase instruction. As a result, the optical head 30 projects an optical beam kept at the erase level onto the reflecting layer 16 of the optical disk 10, thereby restoring the physical changes in the reflecting layer to the original state.

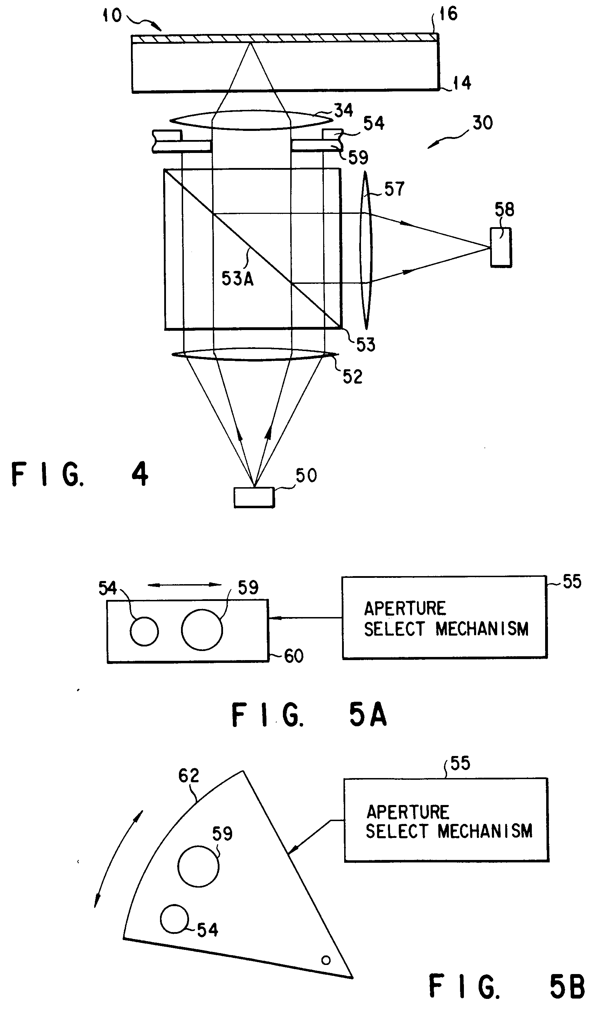

The optical system of the optical head 30 shown in FIG. 1 is constructed as shown in FIGS. 3 and 4. Specifically, in the optical systems of the optical heads shown in FIGS. 3 and 4, a semiconductor laser 50 generates, for example, a divergent laser beam with a wavelength of 650 nm. Usually, in reproducing the information, the semiconductor laser 50 generates a reproducing laser beam of an almost constant intensity. In a recording operation, the semiconductor laser generates a recording laser beam that is intensity-modulated according to the recording data and has a relatively high intensity. In an erasing operation, the semiconductor laser generates an erasing laser beam that has an almost constant intensity higher than that in a reproducing operation. The laser beam emitted from the semiconductor laser 50 is collimated by a collimator lens 52 into a collimated laser beam, which is allowed to enter a half prism 53. The beam travels straight through a half mirror 53A inside the half prism 53 and is directed from the emitting surface at the object lens 34 via the first or second aperture 54 or 59 selected by the aperture select mechanism 55 as explained later in detail.

Either the first or the second aperture 54 or 59 is selected according to the thickness of the transparent substrate 14 of the optical disk 10 as described later in detail, and the diameter of the optical beam directed at the optical disk 10 is selected, depending on the thickness of the transparent substrate 14. The laser beam passed through the first aperture 54 or second aperture 59 and gathered by the object lens 34 is directed onto the optical disk 10. The beam is then refracted at the transparent substrate 14 of the optical disk 10 and is gathered to the reflecting layer 16 formed on the transparent substrate 14, thereby forming a beam spot on the reflecting layer 16. With the object lens 34 kept in the in-focus state, the smallest beam spot corresponding to the beam waist of the laser beam is formed on the reflecting layer 16. As explained earlier, on the reflecting layer 16 of the optical disk 10, tracks are generally formed concentrically or spirally as an information recording area. On the tracks, a physical recording section, such as pits, is formed. Normally, as explained earlier, the track servo mechanism operates to keep the object lens 34 or the optical head in the tracking state where the lens or the head is moved minutely so that the laser beam may trace the track.

In reproducing the information, the laser beam is modulated with the recording section of the track formed on the reflecting layer 16 and the modulated laser beam is reflected from the reflecting layer 16. Furthermore, in recording the information, the modulated recording laser beam makes physical changes in the reflecting layer in the track, thereby forming a recording section. In addition, in an erasing operation, the projection of the erasing laser beam onto the recording section restores the physical changes in the recording section to the original state.

The laser beam reflected from the reflecting layer 16 is gathered again by the object lens 34 and is returned to the half prism 53 via the first aperture 54 or the second aperture 59. The returned laser beam is reflected by the half mirror 53A in the half prism 53 and is directed to a projection lens 57. The projection lens 57 gather the beam at an optical sensor 58. In a reproducing operation, the reproducing laser beam modulated with the recording section is converted into a sense signal by the sensor 58. From the sense signal, a signal processing circuit (not shown) generates a reproducing signal, a focusing signal, and a tracking signal. In a recording operation or an erasing operation, the recording or erasing laser beam is sensed by the sensor 58. From the sense signal, the signal processing circuit generates a focusing signal and a tracking signal.

In the optical system of the optical head, either the first or the second aperture 54 or 59 is selected, depending on the structure of the optical disk 10, that is, the thickness of the transparent substrate 14 of the optical disk 10 as shown in FIG. 3 or 4, thereby limiting the laser beam directed to the object lens 34. For example, in the optical systems shown in FIGS. 3 and 4, when the semiconductor laser 50 generates a laser beam with a wavelength of 650 nm, the aperture 54 is selected by the aperture select mechanism 55 for a high-density recording optical disk 10 whose transparent substrate thickness is 0.6 mm as shown in FIG. 3 so that a convergent optical beam with a numerical aperture of 0.6 larger than that of the beam passing through the aperture 59 shown in FIG. 4 may be projected. The laser beam passed through the aperture 54 is gathered by the object lens 34 and is projected onto the reflecting layer 16 via the transparent substrate 14 having a thickness of 0.6 mm, thereby forming the smallest beam spot of 0.9 µm on the reflecting layer 16.

Unlike the optical disk 10 shown in FIG. 3, in the case of an optical disk whose transparent substrate 14 is as relatively thick as 1.2 mm as shown in FIG. 4, the aperture 59 is selected by the aperture select mechanism 55 so that a convergent optical beam having a numerical aperture of 0.36 smaller than that of the optical beam passing through the aperture 54 may be projected. Normally, optical disks whose transparent substrate 14 is as relatively thick as 1.2 mm is known as compact disks (CDs), which are already on the market in the form of music CDs, CD read-only memories (CD-ROMs), and rewritable CD random-access memories (rewritable CD-RAMs).

In the optical system of FIG. 4 where the aperture 59 whose numerical aperture is 0.36 has been selected, the laser beam passing through the aperture 59 is limited more than it passes through the aperture 54 in the optical system of FIG. 1 where the aperture 54 has been selected. The laser beam passes through the aperture 59, which makes the diameter of the beam smaller. The smaller-diameter laser beam is then gathered by the object lens 34 and is projected onto the reflecting layer 16 via the transparent substrate 14 having a thickness of 1.2 mm, thereby forming the smallest beam spot 1.6 µm in diameter.

If in the optical system of FIG. 3, the information were reproduced from the optical disk having the transparent substrate 56 as relatively thick as 1.2 mm without changing the aperture 54, the aberration of the laser beam would get larger when passing through the transparent substrate 14 and consequently a very small beam spot could not be formed on the reflecting layer 16. Namely, the thicker the transparent substrate 14 of the optical disk 10, the more the object lens 34 is separated from the optical disk 10 to keep the object lens 34 in the in-focus state, because the refractive index of the transparent substrate 14 is larger than that of air. This means that the focus permissible error of the object lens 34 becomes smaller and therefore even a minute shift of or a minute tile of the object lens 34 would cause the size of the beam spot to change greatly, or permit halos corresponding to side lobes to develop around the beam spot.

In contrast, with the aperture 59 having a smaller numerical aperture than that of the aperture 54 as shown in the optical system of FIG. 4, even when the information is reproduced from or recorded on an optical disk having a relatively thick transparent substrate 14, the laser beam is projected from the object lens 34 onto the transparent substrate 14 in a small area and the aberration of the laser beam is small, enabling a very small beam spot to be formed on the reflecting layer 16. Namely, the optical beam whose diameter is limited is gathered by the object lens 34, making the focal depth greater with respect to the focal point, in other words, making the focus permissible error larger. Therefore, even when the object lens 34 moves or tilts minutely, there is no possibility that the size of the beam spot will change greatly or halos will develop around the beam spot, with the result that the beam spot on the reflecting layer 16 can be kept the smallest relatively easily.

FIGS. 5A and 5B illustrate examples of the structure for selecting either aperture 54 or aperture 59. FIG. 5A shows a structure where the apertures 54 and 59 differing in numerical aperture are arranged in a straight line on a flat plate 60. With this structure, the apertures 54, 59 are selected by moving the flat plate 60 linearly as shown by the arrow. FIG. 5B shows a structure where the apertures 54 and 59 differing in numerical aperture are arranged in an arc on a pie-cut-shaped plate 62. With this structure, the apertures 54, 59 are selected by rotating the pie-cut-shaped plate 62 through a specific angle as shown by the arrow. The selection of the apertures 54, 59 is not restricted to the structures of FIGS. 5A and 5B. For instance, a structure where a plurality of moving plates limit the aperture like the shutter of a camera may be used.

In the above embodiment, when an optical disk whose transparent substrate is 0.6 mm in thickness is loaded in the optical disk apparatus, the aperture 54 is selected so that a convergent optical disk having a numerical aperture of 0.6 may be projected; and when an optical disk whose transparent substrate is 1.2 mm in thickness is loaded, the aperture 59 is selected so that a convergent optical disk having a numerical aperture of 0.36 may be projected. For an optical disk, however, the thickness of its transparent substrate ranges from 0.4 to 0.8 mm, it is desirable that the aperture 54 should be selected so that a convergent optical beam having a numerical aperture selected in the range from 0.5 to 0.65 mm may be projected; and the thickness of its transparent substrate ranges from 0.9 to 1.3 mm, it is desirable that the aperture 59 should be selected so that a convergent optical beam having a numerical aperture selected in the range from 0.3 to 0.5 mm may be projected.

The present invention may applied to reproducing the data from and recording the data on not only an optical disk 10 having different thicknesses as described with reference to FIGS. 3 and 4, but also an optical disk having different recording densities.

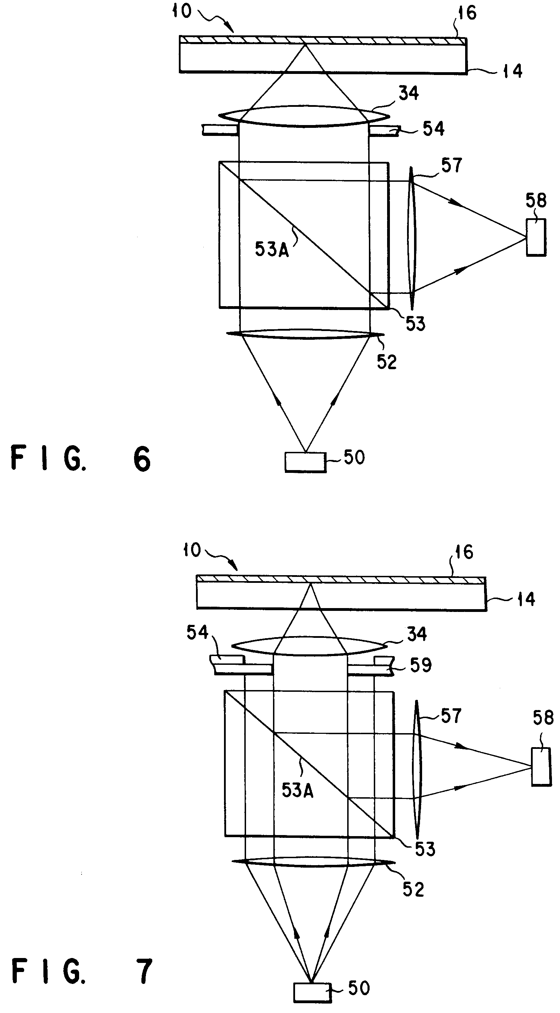

Specifically, as shown in FIG. 6, the aperture 54 having a relatively large aperture of 0.6 is selected for an optical disk 10 on which data has been recorded at a high density to record a large volume of video and audio data, for example, an optical disk 10 on which data has been recorded at a high recording density with a track pitch of 0.9 µm for marks recorded at a high density and the smallest mark pitch of 1.0 µm. Then, the optical beam is gathered by the object lens 34, thereby forming a beam spot of about 0.9 µm in diameter for high-density recording o and reproducing from the reflecting layer 16 of the optical disk 10. Therefore, it is possible to reproduce the data reliably from the mark recorded at a high density with a track pitch of 0.9 µm and the smallest mark pitch of 1.0 µm. The mark of that size may be formed on the reflecting layer 14 as a recording section.

In contrast, the aperture 59 allowing an optical beam having a numerical aperture of 0.36 smaller than that of an optical beam passing through the aperture 54 is selected for an optical disk 10 on which data is recorded at a low density, such as an ordinary CD-ROM or a music CD, for example, an optical disk 10 on which data has been recorded at a low density with a track pitch of 1.5 µm for marks recorded at a low density and the smallest mark pitch of 1.6 µm. Then, the optical beam is gathered by the object lens 34, thereby forming a recording and reproducing beam spot of about 1.6 µm in diameter on the reflecting layer 16 of the optical disk 10. Since the limitation of the optical beam makes the diameter of the beam spot larger, application of suitable power to the optical beam, such as increasing the intensity of the optical beam as the need arises, makes it possible to reproduce the data reliably from the marks recorded at a low density with a track pitch of 1.5 µm and the smallest mark pitch of 1.6 µm. Furthermore, marks of a suitable size can be formed on the reflecting layer 16. Each of he optical disks shown in FIGS. 6 and 7 is provided with a transparent substrate 14 of the same thickness of 0.6 mm.

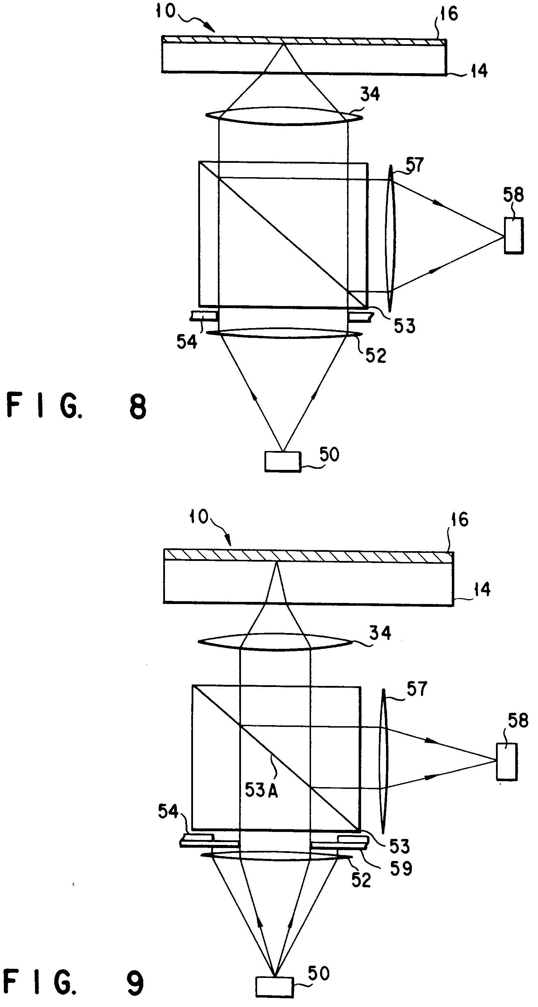

While in the above-described embodiment, the apertures 54, 59 are positioned between the object lens 34 and the half prism 53, they may be located between the half prism 53 and the collimator lens 52 as shown in FIGS. 8 and 9. In the optical system shown in FIG. 8 like the optical system shown in FIG. 3 or FIG. 6, the aperture 54 is selected and the optical beam is gathered by the object lens 34, thereby forming a beam spot of about 0.9 µm in diameter for high-density recording on and reproducing from the reflecting layer 16 of the optical disk 10. Furthermore, in the optical system of FIG. 9, like the optical system of FIG. 4 or FIG. 7, the aperture 59 is selected and the optical beam is gathered by the object lens 34, thereby forming a beam spot of about 1.6 µm in diameter for recording o and reproducing from the reflecting layer 16 of the optical disk 10.

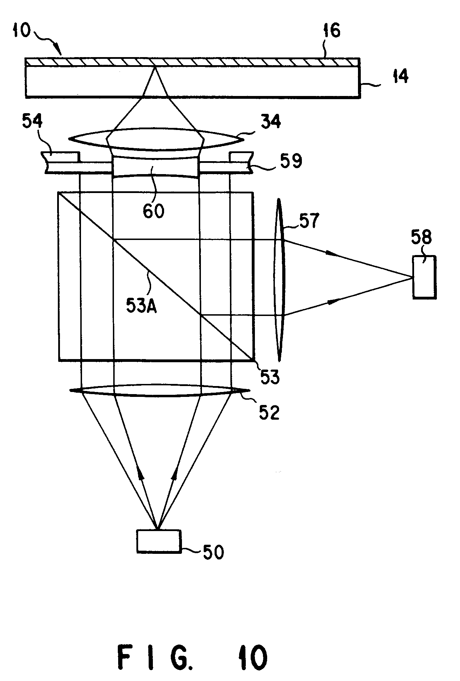

Normally, the object lens 34 is designed to have such lens power as forms the optical beam into a much smaller beam spot for high-density recording and reproducing. With such a design, when the aperture 59 is selected to form a beam spot larger than that for high-density recording and reproducing, aberration occurs in the optical beam, leading to the possibility that the beam spot will be distorted or halos will appear around the beam spot. To correct the aberration of the beam spot, it is desirable that the aperture 59 should be provided with a correction lens, for example, a concave lens 60, as shown in FIG. 10. In such an optical system, the aperture 59 is selected and the correction lens 59 and the object lens 34 are combined to form a composite lens system, that is, a composite lens for CDs that has lower lens power than that of the object lens, thereby eliminating the aberration of the lens system that can develop in reproducing a CD.

Furthermore, in the above-explained embodiment, in reproducing the data from and recording the data on an SD, the aperture 54 having a larger numerical aperture is selected; and in reproducing the data from and recording the data on a CD, the aperture 59 having a smaller numerical aperture or a combination of the aperture 59 and the correction lens 60 is selected. The selected aperture is positioned in the optical path. Instead of selecting the apertures 54 and 59 in this way, the optical beam may be gathered by only the object lens during the reproducing or recording of an SD, and the optical beam may be gathered by a composite lens system consisting of a combination of the object lens 34 and the correction lens 60 as shown in FIG. 10 during the reproducing or recording of a CD. That is, only when the data is reproduced from or recorded on a CD, the correction lens 60 may be inserted in the optical path.

While in the above embodiment, for an optical disk 10 on which data is recorded at a high density, the aperture 54 is selected so that a convergent optical beam having a numerical aperture of 0.6 may be projected, and for an optical disk 10 on which data is recorded at a low density, the aperture 59 is selected so that a convergent optical beam having a numerical aperture of 0.36 may be projected, the optical beams passing through the aperture 54, 59 are not restricted to those numerical apertures. The aperture 54 has only to have an aperture diameter that enables the projection of a convergent optical beam having a numerical aperture selected from the range of numerical apertures from 0.5 to 0.65. Additionally, the aperture 59 has only to have an aperture diameter that enables the projection of a convergent optical beam having a numerical aperture selected from the range of numerical apertures from 0.3 to 0.5.

With the present invention, by making smaller the diameter of an optical beam entering the condensing lens, it is possible to record the information on and reproduce the information from optical disks of various substrate thicknesses. Furthermore, it is possible to record the information on and reproduce the information from optical disks of the same substrate thickness, but of different information recording densities.

## Claims

1. An apparatus for optically reproducing information from an optical disk (10) including a transparent substrate (14) having one side and the other side stamped with information facing the one side and a reflecting layer (16) formed on the other side of the transparent substrate, said apparatus characterized by comprising:
an optical system (52, 53) for generating an optical beam and directing it to one side of said optical disk (10);
converging means (34) for converging the optical beam on said reflecting layer (16) via the transparent substrate (14) of said optical disk (10);
limiting means (54, 59) for limiting the numerical aperture of the convergent optical beam directed to said reflecting layer (16) by selecting one of a first and second apertures (54, 59) according to the physical properties of said optical disk (10); and
sensing means (58) for sensing the optical beam reflected from said reflecting layer (16) and simultaneously intensity-modulated in reflection.

2. An apparatus according to claim 1, characterized in that said optical system (52, 53, 34) includes:
generating means (50) for generating an optical beam; and
a collimator lens system (52) for collimating the optical beam and forcing the collimated beam to enter said limiting means.

3. An apparatus according to claim 1, characterized in that the physical properties of said optical disk (10) include at least either the thickness of said transparent substrate (14) or the stamping density of the information formed on the other side of said transparent substrate (14).

4. An apparatus according to claim 3, characterized in that said limiting means has a first aperture (54) and a second aperture (59) that allow an optical beam to pass through, the first aperture (54) designed to emit a convergent optical beam having a first numerical aperture selected from the range of numerical apertures from 0.5 to 0.65, the second aperture (59) designed to emit a convergent optical beam having a second numerical aperture selected from the range of numerical apertures from 0.3 to 0.5 smaller than the first numerical aperture, the first aperture (54) supposed to be selected when said transparent substrate (14) of said optical disk (10) has a first thickness in the range of 0.4 to 0.8 mm, and the second aperture (59) supposed to be selected when said transparent substrate (14) of said optical disk (10) has a second thickness in the range of 0.9 to 1.3 mm.

5. An apparatus according to claim 1, characterized in that said limiting means has a first aperture (54) and a second aperture (59) that allow an optical beam to pass through and includes means for selectively positioning one of the first and second apertures in an optical path of the optical beam advancing to said converging means.

6. An apparatus according to claim 1, characterized in that said limiting means includes a shutter (60) having a first aperture (54) and a second aperture (59) to positioned in an optical path of the optical beam advancing to said converging means and means for driving the shutter (60) to selectively position one of the first and second apertures in the optical path of the optical beam.

7. An apparatus according to claim 1, characterized in that said limiting means includes a lens selectively positioned in an optical path of the optical beam advancing to said converging means.

8. An apparatus according to claim 7, characterized in that said limiting means includes a shutter (60) having a first aperture (54) and a second aperture (59) to be positioned in an optical path of the optical beam advancing to said converging means and means for driving the shutter (60) to selectively position one of the first and second apertures in the optical path of the optical beam, and said lens is provided on one of the first aperture (54) and the second aperture (59).

9. A recording/reproducing apparatus that optically records information on and reproduces information from an optical disk (10) having a transparent substrate (14) and a recording layer (16) formed on the transparent substrate (14), said recording/reproducing apparatus characterized by comprising:
an optical system (52, 53, 34) for directing an optical beam to said optical disk (10);
converging means (34) for converging an optical beam directed to said optical disk (10) on the recording layer (16) via the transparent substrate (14) of said optical disk (10); and
means (54, 59) for adjusting the diameter of the optical beam by allocating one of the first and second apertures (54, 59) to the optical beam directed from said converging means (34) to said recording layer (16) according to the physical properties of said optical disk (10).

10. A recording/reproducing apparatus according to claim 9, characterized in that said optical system (52, 53, 34) includes generating means (50) for generating a divergent optical beam and collimator means (52) for collimating the divergent optical beam and directing the collimated beam to an object lens (34), and
said adjusting means (54, 59) includes limiting means (54, 59) for limiting the collimated optical beam and forcing the limited beam to enter said converging means (34).

11. A recording/reproducing apparatus that optically records information on and reproduces information from an optical disk (10) including a transparent substrate (14) having either a first thickness or a second thickness larger than the first thickness and a recording layer (16) formed on the transparent substrate (14), said recording/reproducing apparatus comprising:
an optical system (52, 53, 34) for directing an optical beam to said optical disk (10);
converging means (34) for converging an optical beam directed to said optical disk (10) on the recording layer (16) via the transparent substrate (14) of said optical disk (10); and
means for adjusting the diameter of the optical beam selectively directed from the converging means (34) to said recording layer (16) according to the thickness of said transparent substrate (14).

12. A recording/reproducing apparatus according to claim 11, characterized in that said optical system (52, 53, 34) includes generating means (50) for generating a divergent optical beam and collimator means (52) for collimating the divergent optical beam and directing the collimated beam to an object lens, and
said adjusting means (54, 59) includes limiting means (54, 59) for limiting the collimated optical beam and forcing the limited beam to enter said converging means (34).

13. A recording/reproducing apparatus according to claim 11, characterized in that said limiting means has a first aperture (54) and a second aperture (59) that allow an optical beam to pass through, the first aperture (54) designed to emit a convergent optical beam having a first numerical aperture selected from the range of numerical apertures from 0.5 to 0.65, the second aperture (59) designed to emit a convergent optical beam having a second numerical aperture selected from the range of numerical apertures from 0.3 to 0.5 smaller than the first numerical aperture, the first aperture (54) supposed to be selected when said transparent substrate (14) of said optical disk (10) has a first thickness in the range of 0.4 to 0.8 mm, and the second aperture (59) supposed to be selected when said transparent substrate (14) of said optical disk (10) has a second thickness in the range of 0.9 to 1.3 mm.

14. A recording/reproducing apparatus according to claim 11, characterized in that said limiting means has a first aperture (54) and a second aperture (59) that allow an optical beam to pass through and includes means for selectively positioning one of the first and second apertures in an optical path of the optical beam advancing to said converging means.

15. A recording/reproducing apparatus according to claim 11, characterized in that said limiting means includes a shutter (60) having a first aperture (54) and a second aperture (59) to be positioned in an optical path of the optical beam advancing to said converging means and means for driving the shutter (60) to selectively position one of the first and second apertures in the optical path of the optical beam.

16. A recording/reproducing apparatus according to claim 11, characterized in that said limiting means includes a lens selectively positioned in an optical path of the optical beam advancing to said converging means.

17. A recording/reproducing apparatus according to claim 16, characterized in that said limiting means includes a shutter (60) having a first aperture (54) and a second aperture (59) to be positioned in an optical path of the optical beam advancing to said converging means and means for driving the shutter (60) to selectively position one of the first and second apertures in the optical path of the optical beam, and said lens is provided on one of the first aperture (54) and the second aperture (59).

18. A recording/reproducing apparatus that optically records information on and reproduces information from an optical disk (10) having a transparent substrate (14) and a recording layer (16) which is formed on the transparent substrate (14) and on which information is to be recorded at either a first recording density or a second recording density lower than the first recording density, said recording/reproducing apparatus characterized by comprising:
an optical system (52, 53, 34) for directing an optical beam to said optical disk (10);
converging means (34) for converging an optical beam directed to said optical disk (10) on the recording layer (16) via the transparent substrate (14) of said optical disk (10); and
means (54, 59) for adjusting the diameter of the optical beam selectively directed from the converging means (34) to said recording layer (16) according to the recording density of said recording layer (16).

19. A recording/reproducing apparatus according to claim 18, characterized in that said optical system (52, 53, 34) includes generating means (50) for generating a divergent optical beam and collimator means (52) for collimating the divergent optical beam and directing the collimated beam to an object lens, and
said adjusting means (54, 59) includes limiting means (54, 59) for limiting the collimated optical beam and forcing the limited beam to enter said converging means (34).

20. A recording/reproducing apparatus according to claim 18, characterized in that said limiting means has a first aperture (54) and a second aperture (59) that allow an optical beam to pass through, the first aperture (54) designed to emit a convergent optical beam having a first numerical aperture selected from the range of numerical apertures from 0.5 to 0.65, the second aperture (59) designed to emit a convergent optical beam having a second numerical aperture selected from the range of numerical apertures from 0.3 to 0.5 smaller than the first numerical aperture, the first aperture (54) supposed to be selected when the first recording density is selected as the recording density of said recording layer (16), and the second aperture (59) supposed to be selected when the second recording density is selected as the recording density of said recording layer (16).

21. A recording/reproducing apparatus according to claim 18, characterized in that said limiting means has a first aperture (54) and a second aperture (59) that allow an optical beam to pass through and includes means for selectively positioning one of the first and second apertures in an optical path of the optical beam advancing to said converging means.

22. A recording/reproducing apparatus according to claim 18, characterized in that said limiting means includes a shutter (60) having a first aperture (54) and a second aperture (59) to be positioned in an optical path of the optical beam advancing to said converging means and means for driving the shutter (60) to selectively position one of the first and second apertures in the optical path of the optical beam.

23. A recording/reproducing apparatus according to claim 18, characterized in that said limiting means includes a lens selectively positioned in an optical path of the optical beam advancing to said converging means.

24. A recording/reproducing apparatus according to claim 23, characterized in that said limiting means includes a shutter (60) having a first aperture (54) and a second aperture (59) to be positioned in an optical path of the optical beam advancing to said converging means and means for driving the shutter (60) to selectively position one of the first and second apertures in the optical path of the optical beam, and said lens is provided on one of the first aperture (54) and the second aperture (59).

25. A method of recording on and reproducing from an optical disk, characterized by comprising the steps of:
selecting one of a first and second convergent optical beams having a first numerical aperture and a second numerical aperture smaller than the first numerical aperture, respectively, according to the physical properties of an optical disk (10) that has a recording layer (16) formed on a transparent substrate (14) and presents one of a first and second physical properties; and
reproducing the information from the recording layer (16) by converging a convergent optical beam having the selected numerical aperture to form an optical beam spot on the recording layer (16).

26. A method according to claim 25, characterized in that said transparent substrate (14) has one of a first thickness and a second thickness larger than the first thickness and selects a first aperture (54, 59) when an optical disk (10) having the first thickness has been selected as the first physical property and a second aperture (54, 59) when an optical disk (10) having the second thickness has been selected as the second physical property.

27. A method according to claim 25, characterized in that the first aperture (54) is designed to emit a first convergent optical beam having a first numerical aperture selected from the range of numerical apertures from 0.5 to 0.65, the second aperture (59) is designed to emit a second convergent optical beam having a second numerical aperture selected from the range of numerical apertures from 0.3 to 0.5 smaller than the first numerical aperture, the first aperture (54) is supposed to be selected when said transparent substrate (14) of said optical disk (10) has a first thickness in the range of 0.4 to 0.8 mm, and the second aperture (59) is supposed to be selected when said transparent substrate (14) of said optical disk (10) has a second thickness in the range of 0.9 to 1.3 mm.

28. A method according to claim 27, characterized in that said recording layer (16) has recording marks formed on it at one of a first recording density and a second recording density lower than the first recording density and selects the first aperture (54) when the first recording density has been selected as the first physical property and the second aperture (59) when the second recording density has been selected as the second physical property.

29. A method according to claim 25, characterized in that the first aperture (54) is designed to emit a first convergent optical beam having a first numerical aperture selected from the range of numerical apertures from 0.5 to 0.65, and the second aperture (59) is designed to emit a second convergent optical beam having a second numerical aperture selected from the range of numerical apertures from 0.3 to 0.5 smaller than the first numerical aperture.
